# EUROPÄISCHE PATENTSCHRIFT

(11) **EP 4 198 760 B1**
(45) Veröffentlichungstag und Bekanntmachung des Hinweises auf die Patenterteilung: **29.01.2025**
(21) Anmeldenummer: 21215913.1
(22) Anmeldetag: 20.12.2021
(51) Int. Cl.: G06F 16/22, G06F 16/901

(54) **VERFAHREN ZUR VERARBEITUNG VON SIGNALDATEN**
METHOD FOR PROCESSING SIGNAL DATA
PROCÉDÉ DE TRAITEMENT DES DONNÉES DE SIGNAL

(43) Veröffentlichungstag der Anmeldung: 21.06.2023
(73) Patentinhaber: PLATH GmbH & Co. KG, 20097 Hamburg (DE)
(72) Erfinder: ALT, Martin, 22359 Hamburg (DE)
(74) Vertreter: Vossius & Partner Patentanwälte Rechtsanwälte mbB

(56) Entgegenhaltungen:
- US-A1- 2003 004 938
- US-A1- 2008 140 682

## Beschreibung

Die vorliegende Offenbarung betrifft Verfahren zur Verarbeitung von Signaldaten.

Im Stand der Technik sind verschiedene Verfahren zur Verarbeitung von Signaldaten bekannt. Beispielsweise sind relationale Datenbanken bekannt, bei denen die Speicherung und der Zugriff auf miteinander verbundener Datenpunkte ermöglicht wird. Relationale Datenbanken basieren auf dem relationalen Modell Daten in Tabellen darzustellen. In einer relationalen Datenbank ist jede Zeile in der Tabelle ein Datensatz mit einer eindeutigen ID, die als Schlüssel bezeichnet wird. Die Spalten der Tabelle enthalten Attribute der Daten, und jeder Datensatz verfügt in der Regel über einen Wert für jedes Attribut, sodass die Beziehungen zwischen Datenpunkten hergestellt werden können.

US 2008/140682 A1 offenbart die Verarbeitung von mehrdimensionalen Daten unter Verwendung eines B-Baums und eines Hilbert-Ordnungsverfahrens.

Der vorliegenden Offenbarung liegt die Aufgabe zugrunde verbesserte Verfahren zur Verarbeitung von Signaldaten bereitzustellen.

Diese Aufgabe wird mit den Merkmalen der unabhängigen Patentansprüche gelöst. Die abhängigen Patentansprüche beziehen sich auf weitere Aspekte.

Gemäß einem Aspekt der vorliegenden Offenbarung wird ein Verfahren zur Verarbeitung von Signaldaten mit den Schritten: a) Empfangen von vollständigen Signaldaten von mindestens einem Sensor, wobei die Signaldaten, die von dem mindestens einen Sensor empfangenen Signale in Zeit und Frequenz beschreiben; b) Speichern der vollständigen Signaldaten in eine erste Datei; c) Speichern von vorbestimmten Signaldaten der vollständigen Signaldaten in eine zweite Datei; d) Erstellen eines Zeit-Frequenz Index-Baums der vorbestimmten Signaldaten, wobei der Zeit-Frequenz Index-Baum auf einem B+-Baum basiert ,wobei jedes Element und jeder Knoten des Zeit-Frequenz Index-Baums einen zusammengesetzten Schlüssel aufweist, wobei der zusammengesetzte Schlüssel einen Sortierschlüssel und einen Suchschlüssel aufweist, und wobei das Erstellen des Zeit-Frequenz Index-Baums aufweist: d1) Einfügen von neuen vorbestimmten Signaldaten in den Zeit-Frequenz Index-Baum unter Verwendung eines Hilbert-Indexes, wobei die vorbestimmten Signaldaten eines empfangenen Signals einen Startzeitpunkt, einen Endzeitpunkt, eine untere Grenzfrequenz und eine obere Grenzfrequenz aufweisen, und wobei das Einfügen von neuen vorbestimmten Signaldaten in den Zeit-Frequenz Index-Baum aufweist:Berechnen des zusammengesetzten Schlüssels für das empfangene Signal mit den Schritten:Berechnen des Hilbert-Indexes basierend auf dem Startzeitpunkt und der unteren Grenzfrequenz, wobei der berechnete Hilbert-Index als Sortierschlüssel verwendet wird; undVerwenden des Startzeitpunkts, des Endzeitpunkts, der unteren Grenzfrequenz und der oberen Grenzfrequenz als Suchschlüssel zum Suchen der Signaldaten.

Verschiedene Ausführungsformen können vorzugsweise die folgenden Merkmale implementieren.

Vorzugsweise werden die vollständigen Signaldaten kontinuierlich in die erste Datei gespeichert.

Vorzugsweise haben die vollständigen Signaldaten eine variable Größe.

Vorzugsweise haben die vorbestimmten Signaldaten eine feste Größe haben und/oder eine feste Anzahl an Attributen.

Vorzugsweise weisen die feste Anzahl an Attributen einen Verweis auf die vollständigen Signaldaten in der ersten Datei auf.

Vorzugsweise entspricht ein ganzzahliges Vielfaches der festen Größe einem Speicherblock eines für die Speicherung verwendeten Dateisystems.

Vorzugsweise weist das Berechnen des Hilbert-Indexes auf: Skalieren des Startzeitpunktes und der unteren Grenzfrequenz, sodass der abzudeckende Wertebereich jeweils als eine vorzeichenlose 32Bit Ganzzahl dargestellt wird und der berechnete Hilbert-Index eine vorzeichenlose 64Bit Ganzzahl ist.

Vorzugsweise weist das Verwenden des Startzeitpunkts, des Endzeitpunkts, der unteren Grenzfrequenz und der oberen Grenzfrequenz als Suchschlüssel auf: Skalieren des Startzeitpunkts, des Endzeitpunkts, der unteren Grenzfrequenz und der oberen Grenzfrequenz, sodass der abzudeckende Wertebereich jeweils als eine vorzeichenlose 32Bit Ganzzahl dargestellt wird.

Vorzugsweise weist das Einfügen von neuen vorbestimmten Signaldaten in den Zeit-Frequenz Index-Baum ferner auf: Bestimmen des Blattknotens K, in dem der Sortierschlüssel des empfangenen Signals einzufügen ist; und Einfügen der Signaldaten des empfangenen Signals in dem Blattknoten K.

Vorzugsweise wird der Elternknoten von dem Blattknoten K aktualisiert, wenn der Blattknoten K kein Wurzelknoten des Zeit-Frequenz Index-Baums ist.

Vorzugsweise weist das Aktualisieren des Elternknotens auf: Bestimmen eines neuen Sortierschlüssels für den Blattknoten K als das Minimum aus einem bisherigen Sortierschlüssel für K und dem Sortierschlüssel der Signaldaten des empfangenen Signals; Bestimmen eines neuen Suchschlüssels aus einem umfassenden Rechteck aus einem bisherigen Suchschlüssel und dem Suchschlüssel des empfangenen Signals; und Propagieren der Änderungen des Sortier- und Suchschlüssels in dem Zeit-Frequenz Index-Baum Richtung Wurzel des Zeit-Frequenz Index-Baum bis der Wurzelknoten erreicht ist oder in einem Knoten keine Änderung erfolgt.

Vorzugsweise weist das Verfahren ferner einen Schritt zum Löschen von vorbestimmten Signaldaten eines Signals in dem Zeit-Frequenz Index-Baum auf.

Vorzugsweise weist das Löschen der vorbestimmten Signaldaten auf: Entfernen der Signaldaten aus dem Blattknoten K in dem die vorbestimmten Signaldaten gespeichert sind; Berechnen eines neuen zusammengesetzten Schlüssels des Blattknotens K im Elternknoten des Blattknotens K; und Propagieren der Änderungen des neuen zusammengesetzten Schlüssels in dem Zeit-Frequenz Index-Baum Richtung Wurzel des Zeit-Frequenz Index-Baum bis der Wurzelknoten erreicht ist oder in einem Knoten keine Änderung erfolgt.

Vorzugsweise weist das Berechnen des neuen zusammengesetzten Schlüssels des Blattknotens K im Elternknoten des Blattknotens K auf: Verwenden des kleinsten Eintrags des Sortierschlüssels im Blattknoten K als neuer Sortierschlüssel; und Bilden eines umfassenden Rechtecks über die Suchschlüssel aller Einträge in dem Blattknoten K als neuen Suchschlüssel.

Vorzugsweise weist das Verfahren ferner einen Schritt zum Suchen von den vorbestimmten Signaldaten eines Signals in dem Zeit-Frequenz Index-Baum auf.

Vorzugsweise weist die Suche beginnend bei dem Wurzelknoten auf: Prüfen jedes Eintrags eines Knotens, ob der Suchschlüssel zu einer Suchanfrage passt; und Ausgeben der Ergebnisse der Prüfung jedes Eintrags eines Knotens, ob der Suchschlüssel zu einer Suchanfrage passt.

Vorzugsweise weist die Suche ferner auf: aa) Wählen eines Suchschlüssels, der zur Suchanfrage passt, wobei das Prüfen jedes Eintrags eines Knotens unter Verwendung des gewählten Suchschlüssels durchgeführt wird; bb) Laden der jeweiligen vorbestimmten Signaldaten, bei denen der Suchschlüssel zu der Suchanfrage passt; cc) Prüfen der geladenen vorbestimmten Signaldaten anhand der Suchanfrage und Bestimmen welche geladenen vorbestimmten Signaldaten zu der Suchanfrage passen; und dd) Laden der vollständigen Signaldaten, die zu den in cc) bestimmten geladenen vorbestimmten Signaldaten gehören, wobei die geladenen vollständigen Signaldaten als Ergebnis ausgegeben werden.

Vorzugsweise weist die Suche ferner auf: aa) Wählen eines Suchschlüssels, der zur Suchanfrage passt, wobei das Prüfen jedes Eintrags eines Knotens unter Verwendung des gewählten Suchschlüssels durchgeführt wird; bb) Laden der jeweiligen vorbestimmten Signaldaten, bei denen der Suchschlüssel zu der Suchanfrage passt; cc) Prüfen der geladenen vorbestimmten Signaldaten anhand der Suchanfrage und Bestimmen welche geladenen vorbestimmten Signaldaten zu der Suchanfrage passen; cc1) Suchen von überlappenden Signaldaten in den vorbestimmten Signaldaten deren Zeit und Frequenz mit den in Schritt cc) bestimmten geladenen vorbestimmten Signaldaten überlappen; cc2) Prüfen der überlappenden Signaldaten anhand von zusätzlichen Suchkriterien und Bestimmen welche der überlappenden Signaldaten zu den zusätzlichen Suchkriterien passen; und cc3) Laden der vollständigen Signaldaten von allen überlappenden Signaldaten, die in cc2) bestimmt wurden die zusätzlichen Suchkriterien erfüllen, wobei die geladenen vollständigen Signaldaten als Ergebnis ausgegeben werden.

Vorzugsweise weist das Verfahren ferner auf: Berechnen einer automatischen Ortung, wenn unter den im Schritt cc3) geladenen vollständigen Signaldaten Peilungen mit unterschiedlichen Fußpunkten sind.

Vorzugsweise werden die überlappenden Signaldaten verworfen, wenn das Prüfen in Schritt cc2) ergibt, dass die zusätzlichen Suchkriterien nicht erfüllt sind.

Gemäß einem weiteren Aspekt der vorliegenden Offenbarung wird ein Computerprogrammprodukt bereitgestellt, umfassend Befehle, die bei der Ausführung des Programms durch einen Computer diesen veranlassen, das vorstehend beschriebene Verfahren auszuführen.

Die Verwendung des Hilbert Indexes bildet Punkte aus einem zweidimensionalen Raum in eine eindimensionale Ordnung so ab, dass Punkte, die in der eindimensionalen Ordnung einen geringen Abstand haben auch im zweidimensionalen Raum einen geringen Abstand haben. Durch die Verwendung des Hilbert Indexes als Sortierindex liegen die Elemente eines Baumknotens im zweidimensionalen Zeit-Frequenzraum dicht zusammen.

Dadurch ergeben sich kompakte Suchschlüssel für die Baumknoten, so dass bei einer Suche nach Zeit-Frequenz relativ früh Teilbäume als nicht zur Suche passend ausgeschlossen werden können, da die Suchschlüssel nicht mit dem gesuchten Bereich überlappen. Dadurch können Knoten sehr gezielt durchsucht werden, und die Wahrscheinlichkeit, dass ein Knoten tatsächlich relevante Daten enthält ist sehr hoch. Außerdem liegen häufig mehrere Elemente eines Knotens im gesuchten Bereich, da die Elemente auch im zweidimensionalen Raum benachbart sind.

Bei anderen Indexverfahren, die eine geringere Lokalität der Daten aufweisen, müssen deutlich mehr Baumknoten geladen werden, so dass die Suche insgesamt deutlich länger dauert, da mehr Baumknoten durchsucht werden müssen.

Da u.U. nicht alle Baumknoten im Hauptspeicher gehalten werden können, sondern ggf. aus dem permanenten Speicher nachgeladen werden müssen, ist die Anzahl der durchsuchten Baumknoten entscheidend für die Geschwindigkeit der Suche.

Nachfolgend werden die vorstehend genannten Aspekte anhand von Ausführungsbeispielen und der Figuren näher erläutert.

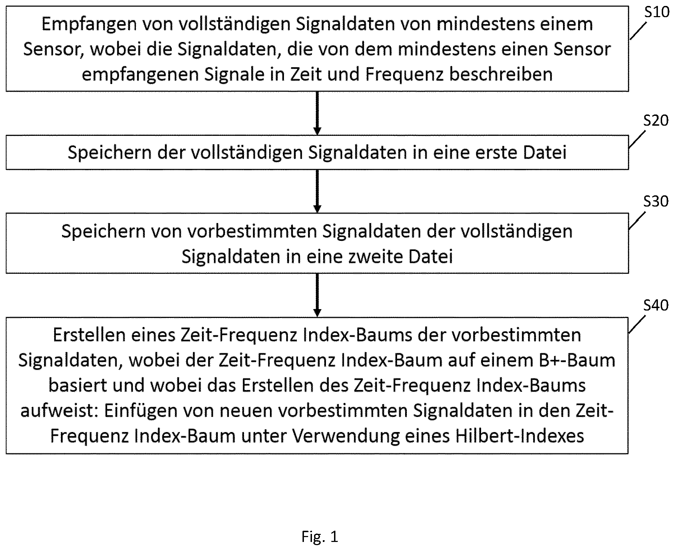

Fig. 1 zeigt einen Ablaufplan eines Verfahrens gemäß einer Ausführungsform der Offenbarung.

Fig. 1 zeigt einen Ablaufplan eines Verfahrens gemäß einer Ausführungsform der Offenbarung. Fig. 1 zeigt insbesondere ein Verfahren zur Verarbeitung von Signaldaten mit den Schritten:
S10: Empfangen von vollständigen Signaldaten von mindestens einem Sensor, wobei die Signaldaten, die von dem mindestens einen Sensor empfangenen Signale in Zeit und Frequenz beschreiben.
S20: Speichern der vollständigen Signaldaten in eine erste Datei.
S30: Speichern von vorbestimmten Signaldaten der vollständigen Signaldaten in eine zweite Datei.
S40: Erstellen eines Zeit-Frequenz Index-Baums der vorbestimmten Signaldaten, wobei der Zeit-Frequenz Index-Baum auf einem B+-Baum basiert und wobei das Erstellen des Zeit-Frequenz Index-Baums aufweist: Einfügen von neuen vorbestimmten Signaldaten in den Zeit-Frequenz Index-Baum unter Verwendung eines Hilbert-Indexes.

In einer Ausführungsform werden die vollständigen Signaldaten kontinuierlich in die erste Datei gespeichert.

In einer Ausführungsform haben die vollständigen Signaldaten eine variable Größe.

In einer Ausführungsform haben die vorbestimmten Signaldaten eine feste Größe und/oder eine feste Anzahl an Attributen.

In einer Ausführungsform weisen die feste Anzahl an Attributen einen Verweis auf die vollständigen Signaldaten in der ersten Datei auf.

In einer Ausführungsform entspricht die feste Größe einem ganzzahligen Teiler der Größe eins Speicherblocks eines für die Speicherung verwendeten Dateisystems.

In einer Ausführungsform weist jedes Element und jeder Knoten des Zeit-Frequenz Index-Baums einen zusammengesetzten Schlüssel auf.

In einer Ausführungsform weist der zusammengesetzte Schlüssel einen Sortierschlüssel und einen Suchschlüssel auf.

In einer Ausführungsform weisen die vorbestimmten Signaldaten eines empfangenen Signals einen Startzeitpunkt, einen Endzeitpunkt, eine untere Grenzfrequenz und eine obere Grenzfrequenz auf.

In einer Ausführungsform weist das Einfügen von neuen vorbestimmten Signaldaten in den Zeit-Frequenz Index-Baum auf: Berechnen des zusammengesetzten Schlüssels für das empfangene Signal mit den Schritten: Berechnen des Hilbert-Indexes basierend auf dem Startzeitpunkt und der unteren Grenzfrequenz, wobei der berechnete Hilbert-Index als Sortierschlüssel verwendet wird; und Verwenden des Startzeitpunkts, des Endzeitpunkts, der unteren Grenzfrequenz und der oberen Grenzfrequenz als Suchschlüssel zum Suchen der Signaldaten.

In einer Ausführungsform weist das Berechnen des Hilbert-Indexes auf: Skalieren des Startzeitpunktes und der unteren Grenzfrequenz, sodass der abzudeckende Wertebereich als eine vorzeichenlose 32Bit Ganzzahl dargestellt wird und der berechnete Hilbert-Index eine vorzeichenlose 64Bit Ganzzahl ist.

In einer Ausführungsform weist das Verwenden des Startzeitpunkts, des Endzeitpunkts, der unteren Grenzfrequenz und der oberen Grenzfrequenz als Suchschlüssel auf: Skalieren des Startzeitpunkts, des Endzeitpunkts, der unteren Grenzfrequenz und der oberen Grenzfrequenz, sodass der abzudeckende Wertebereich als eine vorzeichenlose 32Bit Ganzzahl dargestellt wird.

In einer Ausführungsform weist das Einfügen von neuen vorbestimmten Signaldaten in den Zeit-Frequenz Index-Baum ferner auf: Bestimmen des Blattknotens K, in dem der Sortierschlüssel des empfangenen Signals einzufügen ist; und Einfügen der Signaldaten des empfangenen Signals in dem Blattknoten K.

In einer Ausführungsform wird der Elternknoten von dem Blattknoten K aktualisiert, wenn der Blattknoten K kein Wurzelknoten des Zeit-Frequenz Index-Baums ist.

In einer Ausführungsform weist das Aktualisieren des Elternknotens auf: Bestimmen eines neuen Sortierschlüssels für den Blattknoten K als das Minimum aus einem bisherigen Sortierschlüssel für K und dem Sortierschlüssel der Signaldaten des empfangenen Signals; Bestimmen eines neuen Suchschlüssels aus einem umfassenden Rechteck aus einem bisherigen Suchschlüssel und dem Suchschlüssel des empfangenen Signals; und Propagieren der Änderungen des Sortier- und Suchschlüssels in dem Zeit-Frequenz Index-Baum Richtung Wurzel des Zeit-Frequenz Index-Baum bis der Wurzelknoten erreicht ist oder in einem Knoten keine Änderung erfolgt.

In einer Ausführungsform weist das Verfahren ferner einen Schritt zum Löschen von vorbestimmten Signaldaten eines Signals in dem Zeit-Frequenz Index-Baum auf.

In einer Ausführungsform weist das Löschen der vorbestimmten Signaldaten auf: Entfernen der Signaldaten aus dem Blattknoten K in dem die vorbestimmten Signaldaten gespeichert sind; Berechnen eines neuen zusammengesetzten Schlüssels des Blattknotens K im Elternknoten des Blattknotens K; und Propagieren der Änderungen des neuen zusammengesetzten Schlüssels in dem Zeit-Frequenz Index-Baum Richtung Wurzel des Zeit-Frequenz Index-Baum bis der Wurzelknoten erreicht ist oder in einem Knoten keine Änderung erfolgt.

In einer Ausführungsform weist das Berechnen des neuen zusammengesetzten Schlüssels des Blattknotens K im Elternknoten des Blattknotens K auf: Verwenden des kleinsten Eintrags des Sortierschlüssels im Blattknoten K als neuer Sortierschlüssel; und Bilden eines umfassenden Rechtecks über die Suchschlüssel aller Einträge in dem Blattknoten K als neuen Suchschlüssel.

In einer Ausführungsform weist das Verfahren ferner einen Schritt zum Suchen von den vorbestimmten Signaldaten eines Signals in dem Zeit-Frequenz Index-Baum auf.

In einer Ausführungsform weist die Suche beginnend bei dem Wurzelknoten auf: Prüfen jedes Eintrags eines Knotens, ob der Suchschlüssel zu einer Suchanfrage passt; und Ausgeben der Ergebnisse der Prüfung jedes Eintrags eines Knotens, ob der Suchschlüssel zu einer Suchanfrage passt.

In einer Ausführungsform weist die Suche ferner auf: aa) Wählen eines Suchschlüssels, der zur Suchanfrage passt, wobei das Prüfen jedes Eintrags eines Knotens unter Verwendung des gewählten Suchschlüssels durchgeführt wird; bb) Laden der jeweiligen vorbestimmten Signaldaten, bei denen der Suchschlüssel zu der Suchanfrage passt; cc) Prüfen der geladenen vorbestimmten Signaldaten anhand der Suchanfrage und Bestimmen welche geladenen vorbestimmten Signaldaten zu der Suchanfrage passen; und dd) Laden der vollständigen Signaldaten, die zu den in cc) bestimmten geladenen vorbestimmten Signaldaten gehören, wobei die geladenen vollständigen Signaldaten als Ergebnis ausgegeben werden.

In einer Ausführungsform weist die Suche ferner auf: aa) Wählen eines Suchschlüssels, der zur Suchanfrage passt, wobei das Prüfen jedes Eintrags eines Knotens unter Verwendung des gewählten Suchschlüssels durchgeführt wird; bb) Laden der jeweiligen vorbestimmten Signaldaten, bei denen der Suchschlüssel zu der Suchanfrage passt; cc) Prüfen der geladenen vorbestimmten Signaldaten anhand der Suchanfrage und Bestimmen welche geladenen vorbestimmten Signaldaten zu der Suchanfrage passen; cc1) Suchen von überlappenden Signaldaten in den vorbestimmten Signaldaten deren Zeit und Frequenz mit den in Schritt cc) bestimmten geladenen vorbestimmten Signaldaten überlappen; cc2) Prüfen der überlappenden Signaldaten anhand von zusätzlichen Suchkriterien und Bestimmen welche der überlappenden Signaldaten zu den zusätzlichen Suchkriterien passen; und cc3) Laden der vollständigen Signaldaten von allen überlappenden Signaldaten, die in cc2) bestimmt wurden die zusätzlichen Suchkriterien erfüllen, wobei die geladenen vollständigen Signaldaten als Ergebnis ausgegeben werden.

In einer Ausführungsform weist das Verfahren ferner auf: Berechnen einer automatischen Ortung, wenn unter den im Schritt cc3) geladenen vollständigen Signaldaten Peilungen mit unterschiedlichen Fußpunkten sind.

In einer Ausführungsform werden die überlappenden Signaldaten verworfen, wenn das Prüfen in Schritt cc2) ergibt, dass die zusätzlichen Suchkriterien nicht erfüllt sind.

Nachfolgend wird ein Anwendungsbeispiel des vorstehend beschriebenen Verfahrens gemäß einer Ausführungsform offenbart.

In einer Ausführungsform ist eine Datenbank zur Speicherung und Abfrage von Metadaten empfangener Funksignale offenbart.

Diese Metadaten stammen von verschiedenen Sensoren und beschreiben empfangene Signale in Zeit und Frequenz, d.h. jedes Signal hat eine Start- und Endzeit, sowie eine untere und obere Grenzfrequenz. Je nach Sensor können Signale weitere Messgrößen enthalten, wie zum Beispiel Signal-Rausch-Verhältnis, Frequenzschwerpunkte, Modulationsart und Peilwinkel.

Jeder Datensatz entspricht dem Ergebnis eines Sensors, d.h. es können für ein ausgesandtes Funksignal mehrere Datensätze erzeugt werden, z.B. Peilungen verschiedener Peiler die auf verschiedene Peilstellen verteilt sind, eine Modulationsartenklassifikation eines Klassifikators, eine Aufzeichnung, usw.

Dabei kann pro Signal, je nach Sensor und Signaldauer, entweder ein einzelner Datensatz versandt werden, oder es werden mehrere Datensätze, sog. Signal Events, verschickt. Signal Events dienen dazu, die Entwicklung eines Signals zeitlich fortzuschreiben, so lange bis das Signal nicht mehr empfangen wird.

Im Folgenden werden die verarbeiteten Datensätze kurz als Signale bezeichnet, wobei es sich dabei stets um Metadaten handelt, die von einzelnen Sensoren geliefert wurden.

Signale können auch Verweise ("links") zu anderen Signalen enthalten. Diese links dienen dazu, technische Beziehungen zwischen Signalen zu speichern. So hat zum Beispiel ein Demoduliertes Audio Signal einen Verweis zum modulierten ZF Signal, und eine Ortung Verweise zu den einzelnen Peilungen aus denen die Ortung errechnet wurde.

Inhaltsdaten (digitalisierte Signale, demodulierte Audioaufzeichnungen oder sonstige Inhalte der empfangenen Signale) werden nicht gespeichert, diese Daten liegen als Dateien auf einem Media Server und die gespeicherten Signalmetadaten enthalten nur Verweise auf diese Dateien.

Die Menge der einlaufenden Funksignale ist stark abhängig von der Größe des Systems, den verwendeten Sensoren und dem Signalszenario am Empfangsort. Die Datenrate schwankt dementsprechend je nach System zwischen einigen einzelnen Signal Events bis zu 10.000 Signal Events pro Sekunde. Diese Daten werden gemäß einer Ausführungsform kontinuierlich und dauerhaft verarbeitet.

Für die Suche nach Signalen wird eine Abfrageschnittstelle bereitgestellt. Diese biete grundsätzlich zwei Arten von Abfragen: einfache Abfragen, und Abfragen mit Datenfusion.

Bei einfachen Abfragen werden Signale gesucht, die Suchkriterien, wie z.B. Frequenz/Zeitbereich, Modulationsart, Peilwinkel, SNR, Sensortyp usw. erfüllen. Einfache Abfragen beziehen sich nur auf einzelne Signale, d.h. Ergebnisse einzelner Sensoren.

Für einfache Abfragen erfolgt die Signalsuche gemäß einer Ausführungsform in folgenden Schritten:
1. Zunächst wird der für die verwendeten Suchkriterien geeignetste Index gewählt. Dieser wird dann verwendet, um Kandidaten zu suchen, die möglicherweise zu den Suchkriterien passen.
2. Für diese Kandidaten wird der jeweilige Signaldatensatz geladen, und an Hand der enthaltenen Daten werden alle Suchkriterien für diese Abfrage überprüft.
3. Für alle passenden Signale werden die vollständigen Signaldaten aus der Signaldatei geladen und als Suchergebnis zurückgeliefert.

Bei Abfragen mit Datenfusion können zusätzliche Filterkriterien angegeben werden, die für Signale gelten, die in Zeit und Frequenz mit einem bereits gefundenen Signal überlappen. Es wird zunächst eine einfache Abfrage durchgeführt, anschließend werden automatisch alle weiteren Datensätze gesucht, die in Zeit und Frequenz überlappen, um alle zu einem Signal gehörenden Sensorergebnisse zurückzuliefern. Wenn unter den zu einem Signal gefundenen Sensorergebnissen Peilungen mehrerer Peilstellen sind, wird automatisch eine Ortung berechnet und als weiteres Sensorergebnis zurückgeliefert. Somit kann man zum Beispiel nach Audiosignalen suchen, für die auf der gleichen Zeit und Frequenz Peildaten existieren, die aus einer bestimmten Richtung kommen, oder Ortungen in einem geographischen Gebiet errechnet wurden.

Abfragen mit Datenfusion bestehen gemäß einer Ausführungsform aus drei Teilen:
1. Zunächst wird eine einfache Abfrage durchgeführt, um potentiell interessante Signale zu identifizieren ("Signals of potential interest", SOPIs), d.h. es werden die Schritte 1 und 2 wie für einfache Abfragen beschrieben durchgeführt.
2. Für jedes SOPI werden alle Signale in der Datenbasis gesucht, die in Zeit und Frequenz mit dem SOPI überlappen. D.h. es werden alle Ergebnisse anderer Sensoren gesucht, die vermutlich zur gleichen Aussendung gehören.
3. Wenn unter den gefundenen Signalen Peilungen mit unterschiedlichen Fußpunkten sind, wird zusätzlich eine Ortung berechnet.
4. Für die überlappenden Signale werden die zusätzlichen Filterkriterien überprüft. Dazu werden wiederum die Signaldatensätze der überlappenden Signale geladen. Wenn Filterkriterien erfüllt sind, wird das SOPI mit seinen überlappenden Signalen als Ergebnis zurückgeliefert. Wenn nicht, wird das SOPI verworfen.
5. Für alle Ergebnisse werden die vollständigen Signaldaten aus der Signaldatei geladen und als Suchergebnis zurückgeliefert.

Eine schnelle Suche in Zeit und Frequenz ist wesentlich für die Gesamtgeschwindigkeit, da für Abfragen mit Datenfusion für jedes potentiell interessante Signal (SOPI) eine weitere Suche durchgeführt werden muss. Wenn zum Beispiel nach Signalen gesucht wird, die in den letzten 24 Stunden auf einer bestimmten Frequenz aus dem Großraum Hamburg empfangen wurden, wird zunächst nach allen Signalen gesucht, die in den letzten 24 Stunden auf dieser Frequenz empfangen wurden (SOPIs). Um Ortungen für diese Signale zu berechnen, wird dann für jedes SOPI eine weitere Abfrage gestartet, um in Zeit und Frequenz überlappende Peilungen zu suchen, aus denen eine Ortung berechnet wird. Je nach Abfrage können leicht einige 10,000 SOPIs gefunden werden, d.h. es müssen dann einige 10,000 weitere Abfragen gestartet werden.

Nachfolgend wird die technische Implementierung gemäß einer Ausführungsform offenbart.

In einer Ausführungsform wird für das effiziente Schreiben und Suchen von Signaldaten ein hierarchischer Signaldatenspeicher bereitgestellt. Die Speicherung erfolgt in drei Schichten:
1. Die vollständigen Signaldaten werden kontinuierlich in eine Datei geschrieben. Die Datensätze haben eine variable Größe, je nach Sensor und Signal.
2. Die für eine Signalsuche wesentlichen Parameter werden in Signaldatensätzen fester Größe in eine andere Datei geschrieben. Jeder Signaldatensatz enthält eine feste Zahl an Attributen, u.a. die Adresse des vollständigen Datensatzes in der Signaldatei. Die Größe der Signaldatensätze ist so gewählt, dass mehrere Signaldatensätze vollständig in einen Speicherblock des Dateisystems passen, so dass für jeden Signaldatensatz nur ein Block gelesen werden muss.
3. Für die wichtigsten Signalparameter werden jeweils Indexbäume gehalten, die über den jeweiligen Wert indizieren und einen Verweis auf den jeweiligen Signaldatensatz enthalten. Bei der Indizierung werden verschiedene wesentliche Signalparameter in Index-Bäume aufgenommen, um eine Suche nach den indizierten Parametern zu erleichtern.

Die erzielte Geschwindigkeit des Signaldatenspeichers wird von der Verwendung eines speziell entwickelten Zeit-Frequenz Index-Baums beeinflusst. Dieser erlaubt eine sehr schnelle Suche nach Signalen, die einen gegebenen Zeit-Frequenz Bereich überlappen.

Der Zeit-Frequenz-Baum basiert auf einem B+-Baum, der so erweitert wurde, dass jedes Element und jeder Knoten einen zusammengesetzten Schlüssel besitzt. Dieser zusammengesetzte Schlüssel besteht aus zwei Komponenten, dem Sortierschlüssel und dem Suchschlüssel.

Der Sortierschlüssel dient dazu, die Zeit/Frequenzbereiche in eine eindimensionale Ordnung zu bringen, und wird verwendet, um die Position im Baum zu bestimmen, an der Elemente in den Baum eingefügt werden.

Die zu durchsuchenden Elemente (Zeit/Frequenzbereich von Signalen) können als Rechtecke im Zeit/Frequenz Raum betrachtet werden, ebenso der Suchbereich. Der Suchschlüssel für Signale ist das Zeit/Frequenz Rechteck des Signals, und der Suchschlüssel für Baumknoten ist das umfassende Zeit/Frequenz Rechteck aller Signale, die in allen Kindknoten enthalten sind.

Die Verwendung von getrennten Sortier- und Suchschlüsseln wird durch eine spezielle Behandlung der Berechnung der Schlüssel für alle Baumelemente realisiert, die im Folgenden für die verschiedenen Operationen beschrieben wird. Abgesehen davon entsprechen die Operationen den üblichen Operationen bei B+ Bäumen und werden deshalb nicht weiter beschrieben.

Das Einfügen neuer Signale in den Baum erfolgt in folgenden Schritten:
1. Der Schlüssel für das neue Signal wird folgendermaßen berechnet:
   a. Für die Startzeitpunkt und die untere Grenzfrequenz des Signals wird der Hilbert-Index berechnet. Dazu werden Startzeitpunkt und untere Grenzfrequenz vorher zunächst so skaliert, dass der abzudeckende Wertebereich als vorzeichenlose 32Bit Ganzzahl dargestellt werden kann. Der berechnete Hilbert-Index ist eine vorzeichenlose 64Bit Ganzzahl und wird als Sortierindex (Sortierschlüssel) für das Signal verwendet.
   b. Start- und Endzeit, sowie untere und obere Grenzfrequenz des Signals werden als Suchindex (Suchschlüssel) verwendet (jeweils als 32Bit Ganzzahlen skaliert).
2. Der Blattknoten K in dem der Sortierindex des neuen Signals einzufügen ist wird bestimmt, und das Signal wird in K eingefügt.
3. Wenn es sich bei dem veränderten Baumknoten K nicht um den Wurzelknoten handelt, muss der Schlüssel für K im Elternknoten von K aktualisiert werden:
   a. Der neue Sortierindex für K ist das Minimum aus dem bisherigen Sortierindex für K und dem des neuen Signals.
   b. Der neue Suchindex besteht aus dem umfassenden Rechteck aus dem bisherigen Suchindex und dem des neuen Signals.
   c. Die Schlüsseländerungen müssen weiter im Baum Richtung Wurzel propagiert werden bis der Wurzelknoten erreicht ist, oder in einem Knoten keine Änderung erfolgt (weil der neue Schlüssel nicht den kleinsten Sortierschlüssel hat und innerhalb der vorherigen Suchschlüssels liegt).

Das Löschen von Signalen erfolgt in folgenden Schritten:
1. Das Signal wird aus dem Blattknoten K in dem es gespeichert war entfernt.
2. Der Schlüssel des Knotens K im Elternknoten von K wird neu berechnet:
   a. Als Sortierschlüssel wird der Sortierschlüssel des kleinsten Eintrags in K verwendet.
   b. Als Suchschlüssel muss das umfassende Rechteck über die Suchschlüssel aller Einträge in K gebildet werden.
3. Die Schlüsseländerungen müssen weiter Richtung Wurzel propagiert werden bis der Wurzelknoten erreicht ist, oder in einem Knoten keine Änderung erfolgt.

Um Frequenzen und Sendezeiten bei einer Abfrage ausblenden zu können, werden sowohl positive Suchen (Signale die mit einem Zeit-Frequenz Bereich überlappen) als auch negative Suchen (Signale die mit einem Zeit-Frequenz Sperr-Bereich nicht überlappen) durchgeführt.

Die Suche wird, beginnend im Wurzelknoten, wie folgt durchgeführt:
1. Für jeden Eintrag des Knotens wird geprüft, ob der Suchschlüssel zur Suchanfrage passt:
   a. Für eine positiven Suche wird geprüft, ob der Suchschlüssel des Eintrags mit dem abgefragten Zeit-Frequenzbereich überlappt. Wenn ja, passt der Eintrag zur Suche.
   b. Für eine negative Suche wird geprüft, ob der Suchschlüssel des Eintrags vollständig innerhalb des negativen Zeit-Frequenzbereich liegt. Wenn das der Fall ist passt der Eintrag nicht zur Suche.
2. Für Blattknoten sind alle passenden Einträge Ergebnisse der Suche.
3. Für innere Knoten müssen alle passenden Einträge rekursiv weiter durchsucht werden.

In einer Ausführungsform können die Daten können mit dem ProtocolBuffers Framework von Google serialisiert werden. Die Definition der Inhalte wird spezifisch festgelegt, d.h. welche Felder serialisiert werden (vergleichbar mit dem Schema einer relationalen Datenbank).

Die vollständigen Signaldaten werden sequentiell in eine Datei geschrieben, auf Ebene der Signaldatensätze und Index Bäume können die Daten über "Memory Maps" dem Betriebssystem übergeben werden und dieses entscheidet, welche Daten in den Arbeitsspeicher kopiert werden und welche nicht.

Die Implementierung gemäß der vorstehend beschriebenen Ausführungsformen stellt ein Verfahren bereits, das paralleles lesen und schreiben des Baumes erlaubt. Leseoperationen können dabei beliebig lange dauern können, ohne Schreiboperationen zu blockieren.

Bei Schreibzugriffen sind die Indizierungsoperationen auf das notwendigste beschränkt und sind besonders geeignet für den Anwendungsfall der Signalsuche. Es gibt keine Schlüsselbeziehungen oder Transaktionssicherheit, die bei relationalen Datenbanken beim Schreiben von Daten zusätzlichen Aufwand verursachen.

Bei Lesezugriffen gilt das gleiche wie für Schreibzugriffe. Bei der Datenfusion sind zudem die Datenzugriff- und Anwendungslogik (Suche nach überlappenden Signalen) im gleichen Prozess enthalten. Es entstehen keine zusätzlichen Latenzzeiten für die Übertragung zwischen Prozess- bzw. Rechnergrenzen. Es können somit eine große Menge an Signalen verarbeitet werden (z.B. 10.000 Signale/s entsprechen ungefähr 10Mbyte/s). In entsprechenden Anwendungsfällen kann eine hohe Anzahl an Datensätzen und Abfragen (für 10.000 Ergebnisse müssen 10.000 weitere Abfragen durchgeführt werden, um überlappende Signale zu finden) auftreten, sodass eine höhere Latenzzeit drastische Auswirkungen haben kann. Somit ist das in den hier beschriebenen Ausführungsformen insbesondere in solchen Anwendungsfällen vorteilhaft, da keine zusätzlichen Latenzzeiten entstehen.

Während verschiedene Ausführungsformen der vorliegenden Offenbarung oben beschrieben wurden, sollte es verstanden werden, dass sie nur als Beispiel und nicht als Einschränkung dargestellt wurden. Darüber hinaus können ein oder mehrere Merkmale einer Ausführungsform mit einem oder mehreren Merkmalen einer anderen hierin beschriebenen Ausführungsform kombiniert werden, wie Personen mit gewöhnlichen Kenntnissen der Technik verstehen würden. Daher sollte die Breite und der Umfang der vorliegenden Offenbarung nicht durch eine der oben beschriebenen beispielhaften Ausführungsformen begrenzt werden.

Es versteht sich auch, dass jede Bezugnahme auf ein Element hierin unter Verwendung einer Bezeichnung wie "erstes", "zweites" und so weiter nicht allgemein die Menge oder Reihenfolge dieser Elemente begrenzt. Vielmehr können diese Bezeichnungen hier als praktisches Mittel zur Unterscheidung zwischen zwei oder mehr Elementen oder Instanzen eines Elements verwendet werden. Ein Verweis auf ein erstes und ein zweites Element bedeutet also nicht, dass nur zwei Elemente verwendet werden können oder dass das erste Element dem zweiten Element in irgendeiner Weise vorausgehen muss.

Darüber hinaus wird eine Person, die über normale Fachkenntnisse verfügt, verstehen, dass Informationen und Signale durch eine Vielzahl verschiedener Technologien und Techniken dargestellt werden können. So können beispielsweise Daten, Anweisungen, Befehle, Informationen, Signale, Bits und Symbole, auf die in der obigen Beschreibung Bezug genommen wird, durch Spannungen, Ströme, elektromagnetische Wellen oder eine beliebige Kombination davon dargestellt werden.

Ein Fachmann wird ferner verstehen, dass jeder der verschiedenen dargestellten logischen Blöcke, Einheiten, Prozessoren, Mittel, Schaltungen, Methoden und Funktionen, die in Verbindung mit den hierin offengelegten Aspekten beschrieben werden, durch elektronische Hardware (z. B. eine digitale Implementierung, eine analoge Implementierung oder eine Kombination der beiden), Firmware, verschiedene Formen von Programm- oder Designcode, der Anweisungen enthält (die hier der Einfachheit halber als "Software" oder eine "Softwareeinheit" bezeichnet werden können), oder eine beliebige Kombination dieser Techniken implementiert werden kann.

Um diese Austauschbarkeit von Hardware, Firmware und Software zu verdeutlichen, wurden oben verschiedene Komponenten, Blöcke, Einheiten, Schaltungen und Schritte allgemein im Hinblick auf ihre Funktionalität beschrieben. Ob eine solche Funktionalität als Hardware, Firmware oder Software oder als Kombination dieser Techniken implementiert wird, hängt von der jeweiligen Anwendung und den dem Gesamtsystem auferlegten Designvorgaben ab. Fachleute können die beschriebene Funktionalität auf verschiedene Weise für jede einzelne Anwendung implementieren, aber solche Implementierungsentscheidungen führen nicht zu einer Abweichung vom Anwendungsbereich der vorliegenden Offenbarung. Gemäß verschiedenen Ausführungsformen kann ein Prozessor, ein Gerät, eine Komponente, ein Schaltkreis, eine Struktur, eine Maschine, eine Einheit usw. so konfiguriert werden, dass er/sie eine oder mehrere der hier beschriebenen Funktionen ausführt.

Darüber hinaus versteht der Fachmann, dass verschiedene hier beschriebene logische Blöcke, Einheiten, Geräte, Komponenten und Schaltungen in einer integrierten Schaltung (IC) implementiert oder von dieser ausgeführt werden können, die einen Allzweckprozessor, einen digitalen Signalprozessor (DSP), eine anwendungsspezifische integrierte Schaltung (ASIC), ein Field Programmable Gate Array (FPGA) oder ein anderes programmierbares Logikbauteil oder eine beliebige Kombination davon umfassen kann. Die logischen Blöcke, Einheiten und Schaltungen können ferner Antennen und/oder Sende-/Empfangsgeräte enthalten, um mit verschiedenen Komponenten innerhalb des Netzes oder des Geräts zu kommunizieren. Ein Allzweckprozessor kann ein Mikroprozessor sein, alternativ kann der Prozessor aber auch ein beliebiger konventioneller Prozessor, Controller oder Zustandsautomat sein. Ein Prozessor kann auch als eine Kombination von Recheneinheiten implementiert werden, z. B. eine Kombination aus einem DSP und einem Mikroprozessor, eine Vielzahl von Mikroprozessoren, ein oder mehrere Mikroprozessoren in Verbindung mit einem DSP-Kern oder jede andere geeignete Konfiguration zur Ausführung der hier beschriebenen Funktionen. Wenn die Funktionen in Software implementiert sind, können sie als eine oder mehrere Anweisungen oder Codes auf einem computerlesbaren Medium gespeichert werden. So können die Schritte eines hierin offengelegten Verfahrens oder Algorithmus als Software implementiert werden, die auf einem computerlesbaren Medium gespeichert ist.

Zu den computerlesbaren Medien gehören sowohl Computerspeichermedien als auch Kommunikationsmedien, einschließlich aller Medien, mit denen ein Computerprogramm oder ein Code von einem Ort zum anderen übertragen werden kann. Ein Speichermedium kann jedes verfügbare Medium sein, auf das ein Computer zugreifen kann. Als Beispiel und ohne Einschränkung können solche computerlesbaren Medien RAM, ROM, EEPROM, CD-ROM oder andere optische Plattenspeicher, Magnetplattenspeicher oder andere magnetische Speichervorrichtungen oder jedes andere Medium umfassen, das zum Speichern von gewünschtem Programmcode in Form von Anweisungen oder Datenstrukturen verwendet werden kann und auf das ein Computer zugreifen kann.

In diesem Dokument bezieht sich der Begriff "Einheit", wie er hier verwendet wird, auf Software, Firmware, Hardware und jede Kombination dieser Elemente zur Durchführung der hier beschriebenen zugehörigen Funktionen. Darüber hinaus werden die verschiedenen Einheiten zum Zweck der Diskussion als einzelne Einheiten beschrieben; wie jedoch für einen Fachmann offensichtlich ist, können zwei oder mehr Einheiten kombiniert werden, um eine einzige Einheit zu bilden, die die zugehörigen Funktionen gemäß den Ausführungsformen der vorliegenden Offenbarung ausführt.

Ferner können Speicher oder andere Speichermedien in Ausführungsformen der vorliegenden Offenbarung verwendet werden. Aus Gründen der Klarheit werden in der obigen Beschreibung Ausführungsformen der vorliegenden Offenbarung mit Bezug auf verschiedene Funktionseinheiten und Prozessoren beschrieben. Es wird jedoch deutlich, dass jede geeignete Verteilung der Funktionalität zwischen verschiedenen Funktionseinheiten, Verarbeitungslogikelementen oder Domänen verwendet werden kann, ohne dass die vorliegende Offenbarung dadurch beeinträchtigt wird. So können beispielsweise Funktionen, die in der Abbildung von separaten Verarbeitungslogikelementen oder Steuerungen ausgeführt werden, von demselben Verarbeitungslogikelement oder derselben Steuerung ausgeführt werden. Daher sind Verweise auf spezifische Funktionseinheiten nur Hinweise auf ein geeignetes Mittel zur Bereitstellung der beschriebenen Funktionalität und nicht als Hinweis auf eine strenge logische oder physikalische Struktur oder Organisation zu verstehen.

Verschiedene Modifikationen der in dieser Offenbarung beschriebenen Implementierungen sind für den Fachmann ohne weiteres ersichtlich, und die hierin definierten allgemeinen Grundsätze können auf andere Implementierungen angewandt werden, ohne den Umfang dieser Offenbarung zu verlassen. Daher ist die Offenbarung nicht auf die hier gezeigten Implementierungen beschränkt, sondern hat den größtmöglichen Anwendungsbereich, der mit den hier offengelegten neuen Merkmalen und Grundsätzen vereinbar ist, wie sie in den nachstehenden Ansprüchen aufgeführt sind.

## Patentansprüche

1. Verfahren zur Verarbeitung von Signaldaten mit den Schritten:
a) Empfangen von vollständigen Signaldaten von mindestens einem Sensor, wobei die Signaldaten, die von dem mindestens einen Sensor empfangenen Signale in Zeit und Frequenz beschreiben; (S10)
b) Speichern der vollständigen Signaldaten in eine erste Datei; (S20)
c) Speichern von vorbestimmten Signaldaten der vollständigen Signaldaten in eine zweite Datei; (S30)
d) Erstellen eines Zeit-Frequenz Index-Baums der vorbestimmten Signaldaten, wobei der Zeit-Frequenz Index-Baum auf einem B+-Baum basiert, wobei jedes Element und jeder Knoten des Zeit-Frequenz Index-Baums einen zusammengesetzten Schlüssel aufweist, wobei der zusammengesetzte Schlüssel einen Sortierschlüssel und einen Suchschlüssel aufweist, und wobei das Erstellen des Zeit-Frequenz Index-Baums aufweist:
d1) Einfügen von neuen vorbestimmten Signaldaten in den Zeit-Frequenz Index-Baum unter Verwendung eines Hilbert-Indexes, (S40)
wobei die vorbestimmten Signaldaten eines empfangenen Signals einen Startzeitpunkt, einen Endzeitpunkt, eine untere Grenzfrequenz und eine obere Grenzfrequenz aufweisen, und wobei das Einfügen von neuen vorbestimmten Signaldaten in den Zeit-Frequenz Index-Baum aufweist:
Berechnen des zusammengesetzten Schlüssels für das empfangene Signal mit den Schritten:
Berechnen des Hilbert-Indexes basierend auf dem Startzeitpunkt und der unteren Grenzfrequenz, wobei der berechnete Hilbert-Index als Sortierschlüssel verwendet wird; und
Verwenden des Startzeitpunkts, des Endzeitpunkts, der unteren Grenzfrequenz und der oberen Grenzfrequenz als Suchschlüssel zum Suchen der Signaldaten.

2. Verfahren nach Anspruch 1, wobei die vollständigen Signaldaten kontinuierlich in die erste Datei gespeichert werden und vorzugsweise eine variable Größe haben.

3. Verfahren nach Anspruch 1 oder 2, wobei die vorbestimmten Signaldaten eine feste Größe haben und/oder eine feste Anzahl an Attributen haben, und wobei vorzugsweise die feste Anzahl an Attributen einen Verweis auf die vollständigen Signaldaten in der ersten Datei aufweisen.

4. Verfahren nach Anspruch 3, wobei die feste Größe einem ganzzahligen Teiler der Größe eines Speicherblock eines für die Speicherung verwendeten Dateisystems entspricht.

5. Verfahren nach einem der Ansprüche 1 bis 4, wobei das Berechnen des Hilbert-Indexes aufweist: Skalieren des Startzeitpunktes und der unteren Grenzfrequenz, sodass der abzudeckende Wertebereich als eine vorzeichenlose 32Bit Ganzzahl dargestellt wird und der berechnete Hilbert-Index eine vorzeichenlose 64Bit Ganzzahl ist, und/oder wobei das Verwenden des Startzeitpunkts, des Endzeitpunkts, der unteren Grenzfrequenz und der oberen Grenzfrequenz als Suchschlüssel aufweist: Skalieren des Startzeitpunkts, des Endzeitpunkts, der unteren Grenzfrequenz und der oberen Grenzfrequenz, sodass der abzudeckende Wertebereich als eine vorzeichenlose 32Bit Ganzzahl dargestellt wird.

6. Verfahren nach einem der Ansprüche 1 bis 5, wobei das Einfügen von neuen vorbestimmten Signaldaten in den Zeit-Frequenz Index-Baum ferner aufweist:
Bestimmen des Blattknotens K, in dem der Sortierschlüssel des empfangenen Signals einzufügen ist; und
Einfügen der Signaldaten des empfangenen Signals in dem bestimmten Blattknoten K;
und wobei vorzugsweise der Elternknoten von dem Blattknoten K aktualisiert wird, wenn der Blattknoten K kein Wurzelknoten des Zeit-Frequenz Index-Baums ist.

7. Verfahren nach Anspruch 6, wobei das Aktualisieren des Elternknotens aufweist:
Bestimmen eines neuen Sortierschlüssels für den Blattknoten K als das Minimum aus einem bisherigen Sortierschlüssel für K und dem Sortierschlüssel der Signaldaten des empfangenen Signals;
Bestimmen eines neuen Suchschlüssels aus einem umfassenden Rechteck aus einem bisherigen Suchschlüssel und dem Suchschlüssel des empfangenen Signals; und
Propagieren der Änderungen der Sortier- und Suchschlüssel in dem Zeit-Frequenz Index-Baum Richtung Wurzel des Zeit-Frequenz Index-Baum bis der Wurzelknoten erreicht ist oder in einem Knoten keine Änderung erfolgt.

8. Verfahren nach einem der Ansprüche 1 bis 7, ferner aufweisend einen Schritt zum Löschen von vorbestimmten Signaldaten eines Signals in dem Zeit-Frequenz Index-Baum, wobei das Löschen der vorbestimmten Signaldaten aufweist:
Entfernen der Signaldaten aus dem Blattknoten K in dem die vorbestimmten Signaldaten gespeichert sind;
Berechnen eines neuen zusammengesetzten Schlüssels des Blattknotens K im Elternknoten des Blattknotens K; und
Propagieren der Änderungen des neuen zusammengesetzten Schlüssels in dem Zeit-Frequenz Index-Baum Richtung Wurzel des Zeit-Frequenz Index-Baum bis der Wurzelknoten erreicht ist oder in einem Knoten keine Änderung erfolgt,
und wobei das Berechnen des neuen zusammengesetzten Schlüssels des Blattknotens K im Elternknoten des Blattknotens K vorzugsweise aufweist:
Verwenden des kleinsten Eintrags des Sortierschlüssels im Blattknoten K als neuer Sortierschlüssel; und
Bilden eines umfassenden Rechtecks über die Suchschlüssel aller Einträge in dem Blattknoten K als neuen Suchschlüssel.

9. Verfahren nach einem der Ansprüche 1 bis 7, ferner aufweisend einen Schritt zum Suchen von den vorbestimmten Signaldaten eines Signals in dem Zeit-Frequenz Index-Baum, wobei die Suche beginnend bei dem Wurzelknoten aufweist:
Prüfen jedes Eintrags eines Knotens, ob der Suchschlüssel zu einer Suchanfrage passt; und
Ausgeben jedes Eintrags eines Knotens, bei dem der Suchschlüssel zu der Suchanfrage passt.

10. Verfahren nach Anspruch 9, wobei die Suche ferner aufweist:
aa) Wählen eines Suchschlüssels, der zur Suchanfrage passt, wobei das Prüfen jedes Eintrags eines Knotens unter Verwendung des gewählten Suchschlüssels durchgeführt wird;
bb) Laden der jeweiligen vorbestimmten Signaldaten, bei denen der Suchschlüssel zu der Suchanfrage passt;
cc) Prüfen der geladenen vorbestimmten Signaldaten anhand der Suchanfrage und Bestimmen welche geladenen vorbestimmten Signaldaten zu der Suchanfrage passen; und
dd) Laden der vollständigen Signaldaten, die zu den in cc) bestimmten geladenen vorbestimmten Signaldaten gehören, wobei die geladenen vollständigen Signaldaten als Ergebnis ausgegeben werden.

11. Verfahren nach Anspruch 9, wobei die Suche ferner aufweist:
aa) Wählen eines Suchschlüssels, der zur Suchanfrage passt, wobei das Prüfen jedes Eintrags eines Knotens unter Verwendung des gewählten Suchschlüssels durchgeführt wird;
bb) Laden der jeweiligen vorbestimmten Signaldaten, bei denen der Suchschlüssel zu der Suchanfrage passt;
cc) Prüfen der geladenen vorbestimmten Signaldaten anhand der Suchanfrage und Bestimmen welche geladenen vorbestimmten Signaldaten zu der Suchanfrage passen;
cc1) Suchen von überlappenden Signaldaten in den vorbestimmten Signaldaten deren Zeit und Frequenz mit den in Schritt cc) bestimmten geladenen vorbestimmten Signaldaten überlappen;
cc2) Prüfen der überlappenden Signaldaten anhand von zusätzlichen Suchkriterien und Bestimmen welche der überlappenden Signaldaten zu den zusätzlichen Suchkriterien passen; und
cc3) Laden der vollständigen Signaldaten von allen überlappenden Signaldaten, die in cc2) bestimmt wurden die zusätzlichen Suchkriterien erfüllen, wobei die geladenen vollständigen Signaldaten als Ergebnis ausgegeben werden.

12. Verfahren nach Anspruch 11, ferner aufweisend: Berechnen einer automatischen Ortung, wenn unter den im Schritt cc3) geladenen vollständigen Signaldaten Peilungen mit unterschiedlichen Fußpunkten sind, und/oder wobei die überlappenden Signaldaten verworfen werden, wenn das Prüfen in Schritt cc2) ergibt, dass die zusätzlichen Suchkriterien nicht erfüllt sind.

13. Computerprogrammprodukt, umfassend Befehle, die bei der Ausführung des Programms durch einen Computer diesen veranlassen, das Verfahren nach einem der Ansprüche 1 bis 12 auszuführen.

## Claims

1. A method for processing signal data comprising the steps of:
(a) receiving complete signal data from at least one sensor, the signal data describing the signals received from the at least one sensor in terms of time and frequency (S10);
(b) storing the complete signal data in a first file (S20);
(c) storing predetermined signal data of the complete signal data in a second file (S30);
(d) creating a time-frequency index tree of the predetermined signal data, wherein the time-frequency index tree is based on a B+ tree, wherein each element and each node of the time-frequency index tree comprises a composite key, wherein the composite key comprises a sort key and a search key, and wherein the creating of the time-frequency index tree comprises:
d1) inserting new predetermined signal data into the time-frequency index tree using a Hilbert index (S40),
wherein the predetermined signal data of a received signal comprises a start time point, an end time point, a lower cut-off frequency and an upper cut-off frequency, and wherein the inserting of new predetermined signal data into the time-frequency index tree comprises:
calculating the composite key for the received signal comprising the steps of:
calculating the Hilbert index based on the start time point and the lower cutoff frequency, wherein the calculated Hilbert index is used as a sort key; and
using the start time point, the end time point, the lower cutoff frequency, and the upper cutoff frequency as a search key for searching for the signal data.

2. The method according to claim 1, wherein the complete signal data is stored continuously in the first file and preferably has a variable size.

3. The method according to claim 1 or 2, wherein the predetermined signal data has a fixed size and/or a fixed number of attributes, and wherein preferably the fixed number of attributes have a reference to the complete signal data in the first file.

4. The method according to claim 3, wherein the fixed size corresponds to an integer divisor of the size of a memory block of a file system used for storage.

5. The method according to any one of claims 1 to 4, wherein the calculating of the Hilbert index comprises: scaling the start time point and the lower cut-off frequency so that the value range to be covered is represented as an unsigned 32-bit integer and the calculated Hilbert index is an unsigned 64-bit integer, and/or wherein the use of the start time point, the end time point, the lower cut-off frequency and the upper cut-off frequency as search keys comprises: scaling the start time point, the end time point, the lower cut-off frequency and the upper cut-off frequency so that the value range to be covered is represented as an unsigned 32-bit integer.

6. The method according to any one of claims 1 to 5, wherein the inserting of new predetermined signal data into the time-frequency index tree further comprises:
determining the leaf node K in which the sort key of the received signal is to be inserted; and
inserting the signal data of the received signal in the determined leaf node K,
and wherein preferably the parent node is updated by the leaf node K if the leaf node K is not a root node of the time-frequency index tree.

7. The method according to claim 6, wherein the updating of the parent node comprises:
determining a new sort key for the leaf node K as the minimum of a previous sort key for K and the sort key of the signal data of the received signal;
determining a new search key from a comprehensive rectangle of a previous search key and the search key of the received signal; and
propagating the changes of the sort and search keys in the time-frequency index tree towards the root of the time-frequency index tree until the root node is reached or no change occurs in a node.

8. The method according to any one of claims 1 to 7, further comprising a step of deleting predetermined signal data of a signal in the time-frequency index tree, wherein the deleting of the predetermined signal data comprises:
removing the signal data from the leaf node K in which the predetermined signal data is stored;
calculating a new composite key of the leaf node K in the parent node of the leaf node K; and
propagating the changes of the new composite key in the time-frequency index tree towards the root of the time-frequency index tree until the root node is reached or no change occurs in a node,
and wherein the calculating of the new composite key of the leaf node K in the parent node of the leaf node K preferably comprises:
using the smallest entry of the sort key in the leaf node K as new sort key; and
forming a comprehensive rectangle over the search keys of all entries in the leaf node K as new search key.

9. The method according to any one of claims 1 to 7, further comprising a step of searching for the predetermined signal data of a signal in the time-frequency index tree, wherein the search starting at the root node comprises:
checking each entry of a node as to whether the search key matches a search query; and
outputting each entry of a node in which the search key matches the search query.

10. The method according to claim 9, wherein the search further comprises:
aa) selecting a search key matching the search query, wherein the checking of each entry of a node is performed using the selected search key;
bb) loading the respective predetermined signal data for which the search key matches the search query;
cc) checking the loaded predetermined signal data against the search query and determining which loaded predetermined signal data matches the search query; and
dd) loading the complete signal data belonging to the loaded predetermined signal data determined in cc), wherein the loaded complete signal data is output as a result.

11. The method according to claim 9, wherein the search further comprises:
aa) selecting a search key matching the search query, wherein the checking of each entry of a node is performed using the selected search key;
bb) loading the respective predetermined signal data for which the search key matches the search query;
cc) checking the loaded predetermined signal data against the search query and determining which loaded predetermined signal data matches the search query;
cc1) searching for overlapping signal data in the predetermined signal data whose time and frequency overlap with the loaded predetermined signal data determined in step cc);
cc2) checking the overlapping signal data against additional search criteria and determining which of the overlapping signal data matches the additional search criteria; and
cc3) loading the complete signal data from all the overlapping signal data determined in cc2) to fulfill the additional search criteria, wherein the loaded complete signal data is output as a result.

12. The method according to claim 11, further comprising: calculating an automatic localization if the complete signal data loaded in step cc3) includes bearings with different base points, and/or wherein the overlapping signal data is discarded if the check in step cc2) shows that the additional search criteria are not met.

13. A computer program product comprising instructions which, when the program is executed by a computer, cause the computer to perform the method according to any one of claims 1 to 12.

## Revendications

1. Procédé de traitement de données de signal, avec les étapes :
a) de réception de données de signal complètes d'au moins un capteur, dans lequel les données de signal décrivent les signaux reçus par l'au moins un capteur en termes de temps et de fréquence (S10);
b) de mémorisation des données de signal complètes dans un premier fichier (S20) ;
c) de mémorisation de données de signal prédéfinies des données de signal complètes dans un deuxième fichier (S30) ;
d) de création d'une arborescence d'indices temps-fréquence des données de signal prédéfinies, dans lequel l'arborescence d'indices temps-fréquence se base sur une arborescence B+, dans lequel chaque élément et chaque nœud de l'arborescence d'indices temps-fréquence présente une clé composite, dans lequel la clé composite présente une clé de tri et une clé de recherche, et dans lequel la création de l'arborescence d'indices temps-fréquence présente :
d1) l'insertion de nouvelles données de signal prédéfinies dans l'arborescence d'indices temps-fréquence en utilisant un indice de Hilbert (S40),
dans lequel les données de signal prédéfinies d'un signal reçu présentent un moment de début, un moment de fin, une fréquence limite inférieure et une fréquence limite supérieure, et dans lequel l'insertion de nouvelles données de signal prédéfinies dans l'arborescence d'indices temps-fréquence présente :
le calcul de la clé composite pour le signal reçu avec les étapes :
de calcul de l'indice de Hilbert sur la base du moment de début et de la fréquence limite inférieure, dans lequel l'indice de Hilbert calculé est utilisé en tant que clé de tri ; et
d'utilisation du moment de début, du moment de fin, de la fréquence limite inférieure et de la fréquence limite supérieure en tant que clé de recherche pour rechercher les données de signal.

2. Procédé selon la revendication 1, dans lequel les données de signal complètes sont mémorisées en continu dans le premier fichier et présentent de préférence une taille variable.

3. Procédé selon la revendication 1 ou 2, dans lequel les données de signal prédéfinies présentent une taille fixe et/ou présentent un nombre d'attributs fixe, et dans lequel de préférence le nombre d'attributs fixe présente un renvoi aux données de signal complètes dans le premier fichier.

4. Procédé selon la revendication 3, dans lequel la taille fixe correspond à un diviseur entier de la taille d'un bloc de mémoire d'un système de fichiers utilisé pour la mémorisation.

5. Procédé selon l'une quelconque des revendications 1 à 4, dans lequel le calcul de l'indice de Hilbert présente : la mise à l'échelle du moment de début et de la fréquence limite inférieure si bien que la plage de valeurs à couvrir est représentée en tant qu'un nombre entier de 32 bits sans signe et que l'indice de Hilbert calculé est un entier de 64 bits sans signe, et/ou dans lequel l'utilisation du moment de début, du moment de fin, de la fréquence limite inférieure et la fréquence limite supérieure en tant que clé de recherche présente : la mise à l'échelle du moment de début, du moment de fin, de la fréquence limite inférieure et la fréquence limite supérieure si bien que la plage de valeurs à couvrir est représentée en tant qu'un nombre entier de 32 bits sans signe.

6. Procédé selon l'une quelconque des revendications 1 à 5, dans lequel l'insertion de nouvelles données de signal prédéfinies dans l'arborescence d'indices temps-fréquence présente en outre :
la définition du nœud feuille K, dans lequel la clé de tri du signal reçu est à insérer ; et
l'insertion des données de signal du signal reçu dans le nœud feuille K défini ;
et dans lequel de préférence le nœud parent est mis à jour par le nœud feuille K lorsque le nœud feuille K n'est pas un nœud racine de l'arborescence d'indices temps-fréquence.

7. Procédé selon la revendication 6, dans lequel la mise à jour du nœud parent présente :
la définition d'une nouvelle clé de tri pour le nœud feuille K en tant que le minimum à partir d'une clé de tri actuelle pour K et de la clé de tri des données de signal du signal reçu ;
la définition d'une nouvelle clé de recherche à partir d'un rectangle complet composé d'une clé de recherche actuelle et de la clé de recherche du signal reçu ; et
la propagation des modifications des clés de tri et de recherche dans l'arborescence d'indices temps-fréquence vers la racine de l'arborescence d'indices temps-fréquence jusqu'à ce que le nœud racine soit atteint ou qu'aucune modification ne se produise dans un nœud.

8. Procédé selon l'une quelconque des revendications 1 à 7, présentant en outre une étape destinée à supprimer des données de signal prédéfinies d'un signal dans l'arborescence d'indices temps-fréquence, dans lequel la suppression des données de signal prédéfinies présente :
le retrait des données de signal du nœud feuille K, dans lequel les données de signal prédéfinies sont mémorisées ;
le calcul d'une nouvelle clé composite du nœud feuille K dans le nœud parent du nœud feuille K ; et
la propagation des modifications de la nouvelle clé composite dans l'arborescence d'indices temps-fréquence en direction de la racine de l'arborescence d'indices temps-fréquence jusqu'à ce que le nœud de racine soit atteint ou qu'aucune modification ne se produise dans un nœud,
et dans lequel le calcul de la nouvelle clé composite du nœud feuille K dans le parent nœud du nœud feuille K présente de préférence :
l'utilisation de la plus petite entrée de la clé de tri dans le nœud feuille K en tant que nouvelle clé de tri ; et
la formation d'un rectangle complet sur les clés de recherche de toutes les entrées dans le nœud feuille L en tant que nouvelle clé de recherche.

9. Procédé selon l'une quelconque des revendications 1 à 7, présentant en outre une étape de recherche de données de signal prédéfinies d'un signal dans l'arborescence d'indices temps-fréquence, dans lequel la recherche commençant sur le nœud racine présente :
la vérification de chaque entrée d'un nœud pour savoir si la clé de recherche est adaptée à une demande de recherche ; et
l'affichage de chaque entrée d'un nœud, pour laquelle la clé de recherche est adaptée à la demande de recherche.

10. Procédé selon la revendication 9, dans lequel la recherche présente en outre :
aa) la sélection d'une clé de recherche, qui est adaptée à la demande de recherche, dans lequel la vérification de chaque entrée d'un nœud est mise en œuvre en utilisant la clé de recherche sélectionnée ;
bb) le chargement des données de signal prédéfinies respectives, pour lesquelles la clé de recherche est adaptée à la demande de recherche ;
cc) la vérification des données de signal prédéfinies chargées à l'aide de la demande de recherche et la définition des données de signal prédéfinies chargées, qui sont adaptées à la demande de recherche ; et
dd) le chargement des données de signal complètes, qui appartiennent aux données de signal prédéfinies chargées définies dans cc), dans lequel les données de signal complètes chargées sont affichées en tant que résultat.

11. Procédé selon la revendication 9, dans lequel la recherche présente en outre :
aa) la sélection d'une clé de recherche, qui est adaptée à la demande de recherche, dans lequel la vérification de chaque entrée d'un nœud est mise en œuvre en utilisant la clé de recherche sélectionnée ;
bb) le chargement des données de signal prédéfinies respectives, pour lesquelles la clé de recherche est adaptée à la demande de recherche ;
cc) la vérification des données de signal prédéfinies chargées à l'aide de la demande de recherche et la définition des données de signal prédéfinies chargées, qui sont adaptées à la demande de recherche ;
cc1) la recherche de données de signal se chevauchant dans les données de signal prédéfinies, dont le temps et la fréquence chevauchent les données de signal prédéfinies chargées définies dans l'étape cc) ;
cc2) la vérification des données de signal se chevauchant à l'aide de critères de recherche supplémentaires et la définition des données de signal se chevauchant, qui sont adaptées aux critères de recherche supplémentaires ; et
cc3) le chargement des données de signal complètes de toutes les données de signal se chevauchant, qui ont été définies dans cc2), qui remplissent des critères de recherche supplémentaires, dans lequel les données de signal complètes chargées sont affichées en tant que résultat.

12. Procédé selon la revendication 11, présentant en outre : le calcul d'une localisation automatique si parmi les données de signal complètes chargées à l'étape cc3) il existe des relèvements avec des points de base différents, et/ou dans lequel les données de signal se chevauchant sont rejetées si la vérification à l'étape cc2) montre que les critères de recherche supplémentaires ne sont pas remplis.

13. Produit-programme d'ordinateur comprenant des instructions qui, lorsque le programme est exécuté par un ordinateur, amènent celui-ci à exécuter le procédé selon l'une quelconque des revendications 1 à 12.
